# EUROPEAN PATENT APPLICATION

(11) **EP 4 475 015 A1**
(43) Date of publication of application: **11.12.2024**
(21) Application number: 23178181.6
(22) Date of filing: 08.06.2023
(51) Int. Cl.: G06F 21/10, G06F 21/60, G06F 21/62

(54) **ENHANCED DATA PROTECTION FOR DATA-PRODUCING DEVICES**

(71) Applicant: Koninklijke Philips N.V., 5656 AG Eindhoven (NL)
(72) Inventor: KAMPERMAN, Franciscus Lucas Antonius Johannes, Eindhoven (NL); GARCIA MORCHON, Oscar, Eindhoven (NL)
(74) Representative: Philips Intellectual Property & Standards

(57) **Abstract**

This invention describes apparatuses/methods for enhanced data protection by determining a required data protection level for a data source, determining at least a first device capable of generating data, and assigning a protection scheme configuration and parameters to the data generated by at least the first device. In an example, a data stream from a data-producing device which is indicated to be sensitive/protected (e.g., one which might reveal confidential information etc.) is protected from reconstruction from unprotected data streams of single or multiple other data-producing devices that may be used to provide useful input to a virtual sensor for that sensitive/protected sensor.

## Description

### FIELD OF THE INVENTION

This invention relates to a data protection system which may be applied to sensor or other data generation devices arranged in a network which may be a local network for example, a home network or home automation system, personal network, sensor networks or augmented/virtual reality (AR/VR) or metaverse applications. The sensors may also be connected by means of a long-range network such as a 3GPP based network or another long-range, such as a LoRA network.

### BACKGROUND OF THE INVENTION

Sensors are increasingly used in local networks such as personal networks, home networks and home automation systems and locations such as commercial, industrial and medical facilities. They can measure temperature, light conditions, but also more personal data like, respiration rate, occupancy, identity, blood pressure (mobile sensor), and all kind of other medical data, movement patterns, etc. In modem home networking interoperability systems like Matter, these data are protected by access control mechanisms which determine who (or which device) can acquire access to data. However, data is uncontrolled once access is given to a third party. For users this is an undesirable situation, specifically for sensitive data. For a user it therefor can be important that he/she still can control personal data even after access has been given.

Moreover, sensitive sensor data (e.g., a microphone listening to a user's interactions) can be reconstructed from 'non-sensitive' sensors such as body or head worn inertial sensors (whose data are being uploaded to e.g., control a VR rendering engine), wherein the sensitive and non-sensitive sensors may act singly or together as a virtual sensor. Therefore, for example, the inertial sensors can be used to determine what the user is saying (e.g., using a password, chatting to friends etc.). It is thus desirable to prevent sensitive information of a first ('important' or 'sensitive') sensor from being reconstructed from `data leakage' of one or more other (`less important' or `less sensitive') sensors' data. In this context, `data leakage' may be seen as data being unintentionally available to third parties.

### SUMMARY OF THE INVENTION

It is an object of the present invention to provide enhanced data protection for sensitive (sensor) data.

There is thus provided apparatuses, methods and computer program products according to an embodiments as claimed in the appended claims.

According to a first aspect (directed to a protection administrator (controller) of an access control system), an apparatus is provided, which is configured to:
determine a protection level required for target data;
determine at least a first device capable of generating the target data;
register the first device and metadata related to the first device as protection control information;
assign based on the protection control information a configuration of a protection scheme and related parameters to the target data generated by the first device.

According to a second aspect (directed to a protection system that may be implemented in an access control layer of an access control system), a system comprises:
a protection administrator comprising an apparatus of the first aspect;
an interface for setting at the protection administrator a usage right of a second device with respect to the target data produced by the first device; and
at least one first device;
wherein the first device is configured to protect its gathered data by using the configuration of the protection scheme and the parameters, and to share the protected data;
wherein the protection administrator is configured to receive a request for the usage right and the configuration of the protection scheme and the parameters; and
wherein the protection administrator provides the usage right and the configuration of the protection scheme to the second device.

In an example, the protection administrator may be collocated with or a functionality of the first device. Thus, the usage right and the configuration of the protection scheme could be provided by the first device, if the first device includes the protection administrator functionality.

According to a third aspect (directed to a protection procedure of an access control layer), a method comprises the steps of:
determining a protection level required for target data;
determining at least a first device capable of generating the target data;
registering the first device and related metadata as protection control information; and
assigning based on the protection control information a configuration of a protection scheme and related parameters to the target data generated by the first device.

According to a fourth aspect, a computer program product is provided, which comprises code means for producing the steps of the method of the third aspect when run on a computer device.

Accordingly, the proposed solution allows a selective provision of individual configurations of data protection schemes for different sensors or other data-producing devices or data sources of target data, which can be accompanied by an allocation of (pre-)determined data usage rights for the target data generated from the sensors or the other data-producing devices or data sources within a system, network or single entity, to ensure that these usage rights cannot be circumvented via a use of virtual sensors taking advantage of data correlations.

Moreover, an overall access control logic can be set up to maintain the correct levels of usage control for all sensors (actual and virtual) in the controlled system.

According to a first option that can be combined with any one of the first to fourth aspects, a usage right may be assigned to a second device with respect to the data produced by the first device, and the usage right and the configuration of the protection scheme and the parameters may be provided to the second device.

As a result, it can be determined and/or commanded that some target data needs to be treated as important or sensitive. The important/sensitivity may be context dependent(e.g., all the time or only at certain times, in all locations or only in certain locations, dependent or independent of the user status or health, etc) and therefore needs to have enhanced protection against unauthorised or uncontrolled data access or virtual sensor reconstruction of privacy sensitive data. This is achieved by allocating appropriate permissions (user rights) to users of the target data for use of raw, unprotected/protected data and to other users for use of data resulting from the protection processing performed on the target data.

According to a second option that can be combined with the first option or any one of the first to fourth aspects, the protection scheme may be based on at least one of digital rights management, multiparty computation, homomorphic encryption, attribute-based encryption, blind source separation, and data obfuscation. This allows flexible use of the proposed solution for various applications based on a suitable protection scheme.

According to a third option that can be combined with the first or second option or any one of the first to fourth aspects, the second device may be located outside a network domain in which the first device is located. Thereby, the proposed enhanced protection scheme can be provided for (sensor) devices in a predetermined network domain to protect data supply to external receivers.

According to a fourth option that can be combined with any one of the first to third options or any one of the first to fourth aspects, one or more of the following actions may be performed (e.g., by the protection administrator of the access control system):
one or more of the following actions:
- requesting a device or application to provide its security capabilities and/or requirements;
- requesting a user or application or service to provide input on the target data;
- requesting a user to provide input regarding a protection level required for either individual devices or aggregated devices;
- exposing data from one or more physical devices or one or more virtual devices protected according to the configuration of the protection scheme;
- determining a protection level for a virtual device based on the configuration of the protection scheme and/or requirements based on at least protection level requirements of underlying physical devices and a protection level of consuming applications; and
- instructing the first device to use a certain type of protection so that data generated by the first device is protected on its way from the first device to the second device.

Thereby, the proposed enhanced data protection system can be adapted to various applications and environments.

According to a fifth option that can be combined with any one of the first to fourth options or any one of the first to fourth aspects, data from the first device may be received and the received data stream of the first device may be protected, wherein protection from an access control layer to the second device may be achieved by means of a given protection option; and feedback from the second device regarding successful and/or unsuccessful application of a given type of protection may be received. This allows central protection of raw data received from the first device at the access control layer of the access control system, so that protected data can be forwarded to the second device. The access control layer may be briefly described as a function which interprets rights for a usage and is often part of an access control system.

According to a sixth option that can be combined with any one of the first to fifth options or any one of the first to fourth aspects, the protection scheme may be a multiparty computing, MPC, protection scheme, wherein protection keys are shares in a key sharing scheme. Thereby, no related protection key needs to be provided and thus access to plaintext data can be prevented.

According to a seventh option that can be combined with any one of the first to fifth options or any one of the first to fourth aspects, the protection scheme may be a homomorphic encryption scheme, wherein the first device obtains a public key and the second device obtains an evaluation key, so that the target data can be processed in an encrypted domain.

According to an eighth option that can be combined with any one of the first to fifth options or any one of the first to fourth aspects, the protection scheme may be an attribute-based encryption scheme, wherein the first device obtains a public key derived from the access control attributes that may give access to the data, and the first device uses it to encrypt the produced data, and the second device obtains a private key that depends on its own attributes, so that the second device may have access to the data if its access control attributes match the attributes of the public key used to encrypt the data.

According to a ninth option that can be combined with any one of the first to fifth options or any one of the first to fourth aspects, the protection scheme may be based on symmetric keys, wherein the first device obtains a symmetric key to protect the produced data and the second device obtains, if authorized, the same symmetric key so that the second device may have access to the data if it is authorized.

According to a tenth option that can be combined with any one of the first to ninth options or any one of the first to fourth aspects, the required protection level for the target data may be determined based on combined data protection requirements of multiple first devices. Thereby, the proposed protection scheme can be used for multiple devices, or a virtual sensor derived from them. In an example, the required protection level may correspond to a maximum protection level of the first devices.

According to a eleventh option that can be combined with any one of the first to tenth options or any one of the first to fourth aspects, the proposed protection system (e.g., the protection administrator) may be controlled by a DRM system to register information about which sensors of a network are designated to generate DRM-protected data and to register based on the information a corresponding access control list in the designated sensors, wherein the use right defines conditions for the second device to access the sensor data, wherein the protection administrator is configured to provide DRM protection keys to the designated sensors to protect their sensor data by using the configuration of the protection scheme and the DRM protection key, and wherein a request for the usage right and the DRM protection key is received from the second device and the usage right and the DRM protection key is provided to the second device. Thereby, the proposed enhanced protection scheme can be combined with a DRM system.

It shall be understood that the apparatuses, methods and systems and computer program products of the independent claims may have similar and/or identical embodiments, in particular, as defined in the dependent claims.

In an alternative approach which may, nevertheless be combined with the approach described above, there is also provided an apparatus for mitigating data leakage from a data-producing device, wherein the apparatus is configured to configure a privacy policy, compute a data protection filter, wherein the data protection filter is arranged to filter data produced by the data-producing device, apply the data filter to the data produced by the data-producing device according to the privacy policy.

In an aspect, the apparatus is configured to compute the data filter using blind source separation.

In an aspect, the computation of the data filter comprises training a virtual sensor model to reproduce a data output of the data-producing device using data output (310) of one or more other data-producing devices, using the virtual sensor model to assess an impact of the data output of at least some of the one or more other data-producing devices (10) on the reproduced data output of the sensitive data-producing device, determining whether or not the one or more other data-producing devices include a compromising data-producing device with respect to the sensitive data-producing device, based on the assessment using the virtual sensor model.

In an aspect, the apparatus is configured to determine a sensitive data-producing device that needs to be protected.

In an aspect, the apparatus is further configured to initiate a protection filtering process for the determined sensitive data-producing device, if at least one compromising data-producing device has been determined.

In an aspect, the apparatus is further configured to re-train the virtual sensor model based on data output of the determined compromising data-producing device.

In an aspect, the apparatus is configured to train the virtual sensor model by using time-aligned output data of the one or more other data-producing devices collected over a certain time period and stored in a data repository.

In an aspect, the virtual sensor model is a linear regression model or a convolutional or transformer-based neural network model trained with a mean square error on a desired output.

In an aspect, the apparatus is configured to apply a virtual sensor performance metric to produce a value that indicates how well the data output of the sensitive data-producing device is reproduced by the virtual sensor model.

In an aspect, the apparatus is configured to use the virtual sensor model to adversarially train a sensor filter model which transforms output data of the determined compromising data-producing device into new data which matches the output data of the sensitive data-producing device, wherein the sensor filter model is updated during this training, but the virtual sensor model is not.

In an aspect, the apparatus comprises an access rights update function for allocating data permission levels to abstracted data-producing devices using their metadata, a protection provision initialisation function for determining when a protection provision system is to be initiated for a specified data-producing device, and a protection provision use function for determining when the protection provision system (42) is to be used to filter compromising sensors.

In an aspect, the protection provision system comprises a sensor filter model application function for processing output data of a determined compromising data-producing device by a sensor filter model to yield filtered data which is represented as the output of a virtual sensor.

In an aspect, the apparatus is configured to obtain the sensor filter model by blind source separation.

In an aspect, the apparatus is configured to determine when the sensor filter model is applied based on a policy determined by a user or a device vendor or a system vendor or a system operator and/or based on metadata of the sensitive data-producing device.

In an aspect, the policy triggers a usage of the sensor filter model based on at least one of a time, a time range, a compromise metric, a location and a context.

In an aspect, the apparatus is configured to perform at least one of marking the determined sensitive data-producing device as compromised in metadata related to the sensitive data-producing device, performing compromising data-producing device determination and marking data-producing devices as compromising with respect to the sensitive data-producing device in their metadata, performing sensor filter model generation using training data from a data repository and the virtual sensor model from a model cache, representing each filtered compromised output data coming from the sensor filter model as a new virtual sensor marked as not compromising with respect to the sensitive data-producing device and indicating this in related metadata.

There is also provided an apparatus for mitigating data leakage from a data-producing device, wherein the apparatus is configured to receive a data protection filter from an apparatus as described previously, wherein the filter is arranged to filter data produced by the data- producing device, apply the data filter to the data produced by the data-producing device.

In an aspect, the system comprising an apparatus (as claimed in any of the preceding claims and a plurality of data-producing devices.

There is also provided, a method for mitigating data leakage from a data-producing device, wherein the method comprises, determining a sensitive data-producing device that needs to be protected, training a virtual sensor model to reproduce a data output of the sensitive data-producing device using data output of one or more other data-producing devices, using the virtual sensor model to assess an impact of the data output (310) of at least some of the one or more other data-producing devices on the reproduced data output of the sensitive data-producing and determining whether or not the one or more other data-producing devices include a compromising data-producing device with respect to the sensitive data-producing device, based on the assessment using the virtual sensor model.

There is also provided, a computer program product comprising code means for producing the steps described above when run on a computer device.

In an example, there is wearable device, arranged to be worn by a user and arranged to receive a message from second device, the message containing a notification data, the wearable device comprising a processor, wherein the processor is configured to use a security function to apply a security policy to the notification data and wherein the security function is arranged to enable preventing transmission of at least a part of the notification data to a third device.

Also there is a wearable device, arranged to be worn by a user and arranged to receive a message from second device, the message containing a notification data, the wearable device comprising a display, a processor, wherein the processor is configured to use a security function to apply a security policy to the notification data and wherein the security policy prevents the showing of at least a part of the notification data on the display.

The security policy is arranged to selectively inhibit transmission of the at least part of the notification data based on a classification of the notification data.

There is also a wearable device, arranged to be worn by a user, comprising a sensor, the sensor being arranged to measure a physical parameter of the user and output corresponding measurement data, a processor, wherein the processor is configured to use a security function to apply a security policy to the measurement data and wherein the security function is arranged to enable preventing transmission of at least a part of the measurement data to a third device.

The wearable device is arranged to allow the security policy to be configured by a second device by receiving a message from the second device.

The wearable device of any previous claim comprising a secure storage wherein the secure storage is arranged to store security information and wherein the security function is arranged to use the cryptographic key as part of execution of the security policy.

The security policy is based on detection of proximity of the wearable device to a data-entry device.

The data-entry device is at least one selected from the group of a smartphone, a tablet, a laptop or a wireless keyboard.

The inhibition of transmission is stopped by the reception of an instruction from the data-entry device or an indication from the data-entry device that the data-entry device is not being used for the entry of sensitive data.

There is a device arranged to configure a wearable device, wherein the configuring comprises configuring the privacy policy of the wearable device.

The configuring of the privacy policy comprises providing security information to the smart wearable and an identification of a type of data to which the privacy policy applies.

The device has a privacy policy and wherein the device has an application program producing data and wherein the privacy policy is configurable to restrict the providing of the data to a selected wearable device or a selected application program, the selected application program being arranged to be run on a wearable device.

Also this may be summarised as a method of limiting information transmission from a wearable device comprising configuring a privacy policy of a wearable device by transmitting a message to the wearable device, the message containing an instruction to configure the privacy policy, wherein the privacy policy is arranged to selectively inhibit the wearable device from performing an action, the action being displaying or transmitting information received by the wearable device.

The method comprises configuring a privacy policy of a wearable device by transmitting a message to the wearable device, the message containing an instruction to configure the privacy policy, wherein the privacy policy is arranged to selectively inhibit the wearable device from performing an action, the action being a transmission from the wearable device of information generated by the wearable device.

The configuring is performed by a second device and comprises a reception of security information by the wearable device from the second device, the security information being arranged to be used by the wearable device to allow performing of the action.

It shall be understood that a preferred embodiment can also be any combination of the dependent claims or above embodiments with the respective independent claim.

These and other aspects will be apparent from and elucidated with reference to the embodiments described hereinafter.

### BRIEF DESCRIPTION OF THE DRAWINGS

In the following drawings:
Fig. 1 schematically shows a block diagram of a data protection system according to various embodiments;
Fig. 2 schematically shows a flow diagram of a data protection system according to various embodiments;
Fig. 3 schematically shows training processes for a virtual sensor model and a sensor filter model;
Fig. 4 schematically shows a block diagram of a data protection system according to an embodiment;
Fig. 5 schematically shows a process flow diagram of for data protection based on the system of Fig. 4; and
Fig. 6 schematically shows a flow diagram of a data protection process according to an embodiment.

### DETAILED DESCRIPTION OF EMBODIMENTS

Embodiments are now described based on sensor network systems. Such systems may be home networking system or sensor systems for metaverse applications. They may also be located in commercial, industrial or other public spaces (for example, hospitals). The following description is described in terms of a networked arrangement, but it should be noted that the same operations can be applied within a single device.

Throughout the following disclosure, a "home network" is understood as a network comprising sensors and actuators facilitating certain tasks (e.g., lighting or healthcare related). It may include a home network hub (e.g., data distribution entity) in charge of managing the home network and allowing multiple devices or nodes (e.g., sensors and actors) to connect to a device to participate in the network. Furthermore, the term 'home' may be understood to mean 'local' and this encompass other situations such as offices, factories, hospitals etc. The home network hub may also be an entity in charge of orchestrating secure data distribution, e.g., data originated in the network. The home network hub may include or provide access to a router device to link the home network to an external network (e.g., the Internet) and/or may allow adding or removing devices from the network.

Furthermore, a "virtual sensor" or other "virtual device" is understood as a virtual entity that may be instantiated by means of a type of software that processes what a physical sensor or other device otherwise would. It learns to interpret the relationships between the different variables and observes readings from different instruments. Virtual sensing techniques are used to provide feasible and economical alternatives to costly or impractical physical measurement instrument. A virtual sensing system uses information available from other measurements and process parameters to calculate an estimate of the quantity of interest. These virtual devices may use data to gather information that would not be measurable by a single device. This way they may attain information that cannot be measured directly.

Furthermore, a "user" or "homeowner" is understood as referring to a person owning the home network, and in most cases, owning the data collected/gathered/produced by sensors/actuators of the home network.

For the purposes of the present, `usage rights' may be understood to include such things as rights to access, to copy or transfer the data along with rights governing other actions.

Further, a "protection key" is understood as referring to a cryptographic keying material that allows secure sharing/processing of data.

In addition, the term "metaverse" is understood as referring to a shared set of interactable spaces, within which users may interact with one another alongside mutually perceived virtual features (i.e., augmented reality (AR)) or where those spaces are entirely composed of virtual features (i.e., virtual reality (VR)). VR and AR may generally be referred to as "mixed reality" (MR). Such interactable spaces may also be persistent.

Further, the term "data" is understood as referring to a representation according to a known or agreed format of information to be stored, transferred or otherwise processed. The information may particularly comprise one or more channels of audio, video, image, haptic, motion or other form of information or environmental/personal characteristics (e.g., temperature, hart rate, etc.), that may be synchronized and may be derived from sensors (e.g., microphones, cameras, motion detectors, etc.).

Further, the term "registering" is understood as referring to a process of entering or recording an item into/on a list or a directory.

It is noted that throughout the present disclosure only those blocks, components and/or devices that are relevant for the proposed data distribution function are shown in the accompanying drawings. Other blocks have been omitted for reasons of brevity. Furthermore, blocks designated by same reference numbers are intended to have the same or at least a similar function, so that their function is not described again later.

As an example, a digital right management (DRM) system can control data during its lifecycle, by means of encryption and data associating rights describing usage conditions. DRM systems themselves are known, specifically for protecting valuable audio-visual content from music or film companies. Using DRM systems for protecting sensor data e.g. from home networks is however challenging. One reason is that the data generated by sensors is not a piece of data specifically authored and then made available for distribution by a company. It is rather personal data related to a user, which is automatically (and often imperceptibly) generated, and then provided upon request by a service provider in the background. This data can be very privacy sensitive. So much more care needs to be taken.

Over the past several years, the smart home market has grown significantly. In a market once dominated by tech-savvy early adopters, the World Economic Forum estimates that more than 130 million households owned a smart home device in 2022. Matter is a smart home standard created by Project Connected Home Over IP (Project Chip) in 2019. It was officially launched in November 2022 and is maintained by the Connectivity Standards Alliance (CSA), formerly known as the Zigbee Alliance. The standard encourages interoperability between devices and platforms. It allows devices to work offline without requiring continuous access to the cloud and various cloud services.

Some modern systems for home networking, like Matter, use access control lists (ACLs) to manage access to data at nodes and end points. They state which device is allowed to do what on another device (node). Examples are reading or writing of data. In other words, such systems control usage rights. More specifically, access control features aim to ensure that only authorized nodes are permitted access to given application-layer functionality exposed by a data model, through an interaction model. Access control is a fundamental link between a secure channel and the interaction model. To implement a policy of access control, administrators create and maintain a consistent distributed configuration of ACLs across all nodes. Each node may have an ACL containing access control entries which codify the policy. An access control cluster exposes a data model view of a node's ACL which enables its maintenance.

As a result, access control architectures need to consider whether data stays within the compliant group and is thus protected and inside the home of the owner. It may, however, be envisaged that services may be offered to the owner using certain sensor data in such a way that an owner can better control which device and/or entity in/outside the home is accessing the data generated by other device(s). Such services may include health monitoring, presence detection, lighting control, heating, ventilation, air condition (HVAC) control, etc. It may also be envisaged that certain devices may perform certain actions based on data inputs from other devices, without having actual access to the data. In may also be envisaged that data generated in the location of the user may be analysed/processed in a cloud where it may be desirable if the cloud does not have access to the data. It may also be envisaged that certain devices may only have access to the data if their attributes or context allow for it. In these situations, the access control architecture may not be sufficient.

Additionally, data collected by means of a sensor may also leak information from other sensors. For instance, accelerometer measurements may leak information gathered by means of a microphone. Thus, an access control architecture in which usage rights are bound to a target device without considering related devices may not prevent leakage of information of the target device and may therefore not be sufficient.

Moreover, data (e.g., derived from measurements) may be presented to users or applications in an aggregated/processed manner. For instance, if in a room there are multiple light sensors, a user might not be interested in knowing the light readings (intensity, color, etc.) of each of the light sensors, but the aggregated light values in the room (e.g., average light intensity). For instance, given some physical sensors/actuators, it might be feasible to create virtual sensors/actuators, e.g., a virtual actuator is formed by multiple actuators or a virtual sensor is one that provides a sensing output based on the measurements of one or more physical sensors. In this situation, an access control architecture that focuses on physical sensors/actuators only, may not be sufficient.

In general, home data may be precious and privacy sensitive and a homeowner (or user) may want to be able to control data usage (e.g., which device/entity may access produced data for which purpose). They may want to ensure that a data processor has no or limited access to their data when processing it. They may want to enable devices to use data produced by other devices but without the devices having access to originally produced plaintext data. They may want to prevent data leakages from compromising (conflicting) sensors (which may be virtual sensors/actuators). They may want to ensure that data from virtual sensors/actuators is exposed to authorized entities only.

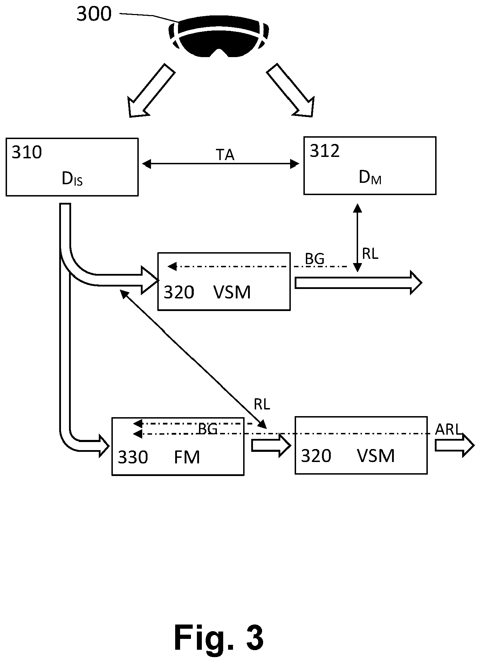

This may be achieved by applying different technologies, e.g., based on DRM, homomorphic encryption, multiparty computation, attribute-based encryption, blind source separation (BSS), or data obfuscation (as described later in connection with embodiments of Figs. 3 to 6).

An example of using BSS might be that a second device receives a configuration to perform blind source separation of the data which is sampled by the second device (and contains some information of the data sampled by the first device) where the configuration is such that the operations of BSS aim at removing the information related to the first device.

The second device might be a smartphone and the first device a separate sensor. Another scenario is where the first device might be integrated into the same housing as the first device (for example, a sensor in a smartphone), in which case the second device might be an app on the smartphone. The second device might also be a software program running at a remote location, for example, implemented in a cloud-based system.

The following embodiments are directed to the protection of home network generated data (e.g., sensor data) during the lifetime of the data and adaptation of an access control architecture.

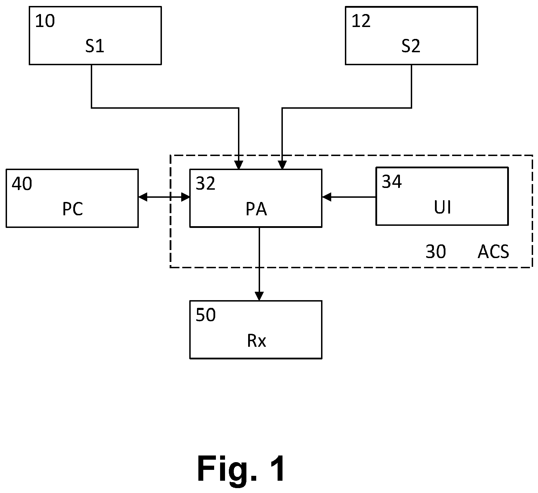

Fig. 1 schematically shows a block diagram of a data protection system according to various embodiments.

At least a first sensor (S 1) 10 and a second sensor (S2) 12 are used to generate data, wherein the "first sensor" shall be understood as a data-producing device (in a home network) capable of sensing, e.g., light, presence, sound, images, etc. and whose data requires protection (it may also leak data sensed by the second sensor). Moreover, the "second sensor" shall be understood as a data-producing device (in the home network) capable of sensing, e.g., light, presence, sound, images, etc.

Additionally, a receiving device (Rx) 50 is provided, which shall be understood as a data consuming device in or outside the home network.

Furthermore, a protection administrator or manager (PA) 32 of an access control system (ACS) 30 shall be understood as referring to an entity (e.g., processor) that provides data protection capabilities for the processing/exchange of data generated/sensed/processed in the home network or a (smart) data-producing device (e.g., the first and second sensors 10, 12).

The protection administrator 32 is configured to communicate with or access or control a protection control function or entity (PC) 40, which shall be understood as referring to a protection scheme or unit capable of providing data protection when data needs to be shared with or processed by the receiving device 50.

Furthermore, the access control system 30 may be configured to provide a user interface (UI) 34 allowing a user to communicate with the protection administrator 32 to configure required protection controls.

In an embodiment, the protection administrator 32 may contain the user interface 34 to be used for setting protection rights for sensor data.

The protection administrator 32 may be an entity operating in an access control layer of the protocol used by the access control system 30. The access control layer (e.g., in a device or in the home network) provides at least one of data protection capabilities for managing data sources (e.g., a sensor in a device or the first and second sensors 10, 12 in a home network), and protection requirements for those data sources (data-producing devices), and usage rights of different receivers (e.g., receiver 50) to those data sources.

Furthermore, the user interface 34 may be provided which allows the user to control aspects of the access control layer to allow a user to configure required or desired protection controls.

In an embodiment, data protection may be achieved by providing parameters to prevent leakage of data collected by the second sensor 12 through the first sensor 10, as described later in connection with the embodiments of Figs. 3 to 6.

In an embodiment, the protection administrator 32 may be provided in a network device such as a network hub in charge of managing the home network. As an alternative, the protection administrator 32 may also be provided in a smart device such as smart phone or tablet or AR/VR glasses. In such an embodiment, the user interface (UI) 34 may be part of the access control UE of such a network hub or smart device and may allow setting and/or configuring the desired security protections.

In an embodiment, the protection administrator 32 and/or protection control function or entity (PC) 40 may be distributed entities whose functionality may be present in a network device such as a network hub and/or the first sensor (S1) 10 and/or the second sensor (S2) and/or the receiving device (Rx) 50.

In an embodiment, the functionality of the protection administrator 32 may, for example, overlap with the functionality of an entity managing access control. This entity may be an authority in the network, which keeps track of usage rights a user is willing to provide.

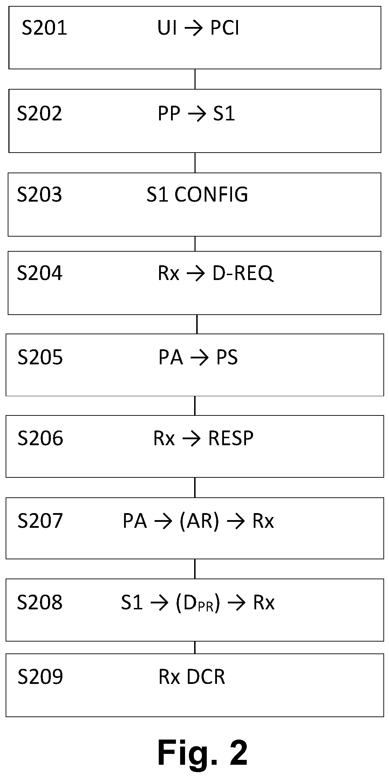

Fig. 2 schematically shows a flow diagram of a data protection process according to various embodiments, which may be executed in the data protection system of Fig. 1.

It is noted that not all steps of Fig. 2 may always be required. Moreover, some or all steps may be performed once or multiple times and in different order.

In step S201, a homeowner may indicate, e.g., via the user interface 34 to the protection administrator 32, that sensor data shall (only) be delivered under a given protection control, e.g., in the access control list (ACL) or in a data protection list (DPL), and that there are usage rights for these sensor data. The protection controls, e.g., applied by the protection control unit 40, may be at least one of DRM, fully homomorphic encryption ((F)HE), multiparty computation (MPC), blind source separation, and data obfuscation.

In step S202, the first sensor 10 may obtain (e.g., receive and/or generate) data protection parameters (PP) which may include a protection key. The protection key may be received from the protection administrator 32 or may be generated by a sensor (e.g., the first and/or second sensor 10, 12).

In an embodiment, the protection key may be different from a group key used in an authorized group to keep data secure.

In step S203, the first sensor 10 may apply the data protection parameters and configuration to the generated data.

If the receiver 50 (e.g., a sensor/actuator in the home network or a cloud service and/or sensor/actuator outside the home network) requires data generated by a sensor (e.g., the first sensor 10 or the second sensor 12), the receiver 50 may send a data request (D-REQ) in step S204. Alternatively, the homeowner may subscribe to a service or add a device to the network that requires data sharing.

In step S205, the protection administrator 32 may share/forward the protection scheme (PS) for the requested data with/to the receiver 50.

In step S206, the receiver 50 may respond (RESP) to the signalled protection scheme. If the receiver 50 agrees with the intended "protected delivery", it will obtain the data protected with the protection key and possibly a usage right. If the receiver 50 wants to access/process the data, it may request a required usage right and/or a related protection key from the protection administrator 32. Some of these sub-steps may be performed at the same time.

In step S207, the protection administrator 32 produces the usage right (AR), that may contain the related protection key (or keys), and sends it to the receiver 50. This information may be sent in a secure manner to the concerned sensor, e.g., using a security infrastructure provided e.g. by the access control layer.

In step S208, the sensor (e.g., the first sensor 10) then provides the protected data (D_{PR}) and the usage right to the receiver 50, which can be outside the network. Alternatively, the usage right may be forwarded separately by the protection administrator 32.

Finally, in step S209, the receiver 50 uses the protected data and related protection key, e.g., to access, e.g., decrypt or process (DCR), the protected data.

The following embodiments are directed to details and/or modifications of the protection administrator 32 and access control layer of the access control system 30 of Fig. 1.

In embodiments, the access control layer may be based on a computer program running on a device (e.g., processor) and relying on data structures (e.g., databases) used to store for each device in the network at least one of a type of device (e.g., virtual/physical device, sensor/actuator), a type of generated/used data, device components (e.g., physical devices that comprise the device), device capabilities to protect data, entities allowed access to the data produced by the device, and a type of protection required (e.g., dependent on the target data-producing device) when sharing the device data.

In embodiments, the access control system 30 may be configured to run the access control layer on a single master device (e.g., a home network hub). In this case, the master device may gather data from different devices (e.g., in the home network) and apply protections before exposing the data (e.g., outside the home network). Data gathering may be done in a secure way by relying on security protocols used within the home network. This may also be a case for a single smart device (such as a smart phone) instead of a home network, where the access control layer protects data from smart device sensors before data is exposed, e.g., to applications. In a case where the access control layer is run on multiple devices (e.g., a home network hub and on end-devices in the home network), the master device may be in charge of orchestrating data protection and instructing end devices to apply certain protections and/or configuring end devices to use certain protections.

In embodiments, the access control layer of the access control system 30 may be capable of one or more of the following actions:
- requesting (a device) to provide its security capabilities (e.g., applicable protection technologies) and/or requirements;
- requesting (a user/application/service/...) to provide input on the required data, e.g., to enable an application;
- requesting (e.g., a user) to provide input regarding a protection level required for either individual devices or aggregated devices;
- exposing data from one or more physical devices or one or more virtual devices (e.g., sensors) protected according to the configured protection options;
- determining a protection level for a (virtual) device based on the configured protection level and/or requirements based on at least the protection level requirements of the underlying devices (e.g., (virtual) device components) and the protection level of the consuming applications;
- instructing a device to use a certain type of protection so that the data generated by the device is protected on its way from the device to the target device;
- receiving data from a device (e.g., end-to-end protected from the device to the access control layer, as in a home network where the end-to-end protection may be based on a link key) and protecting the received data (stream) of the device (on behalf of the device) where protection from the access control layer to the target device is achieved by means of a given protection option; and
- receiving feedback from an end-device regarding successful/unsuccessful application of a given type of protection.

In a DRM-based embodiment, a DRM protection scheme is used, wherein the protection key may be an encryption key (e.g., a symmetric key) used for protection (e.g., encryption or integrity protection). Encryption might be achieved by means of an encryption algorithm such as the advanced encryption standard (AES) in a given block mode or in a stream mode. Protection may only be applied to certain parts of the data for performance reasons. AES is based on a design principle known as a substitution-permutation network and is efficient in both software and hardware. Unlike its predecessor data encryption standard (DES), AES does not use a Feistel network. AES is a variant of Rijndael, with a fixed block size of 128 bits, and a key size of 128, 192, or 256 bits. According to the embodiment, integrity protection may be achieved by means of a message integrity code. In this case, the related protection key may be the protection key itself that is used for decryption and/or integrity verification. Other encryption schemes may be used, e.g., Ascon, a family of authenticated encryption and hashing algorithms designed to be lightweight and easy to implement, even with added countermeasures against side-channel attacks. A DRM system typically also evaluates a usage right to see if the protection key may be used. This protection key is then coupled to the usage right.

In an (F)HE-based embodiment, an (F)HE protection scheme is used, where the protection key may be a public key and the related protection key may be an evaluation key. Homomorphic encryption is a form of encryption which allows computations to be performed on encrypted data without first having to decrypt it. The resulting computations are left in an encrypted form which, when decrypted, result in an output that is identical to that produced had the operations been performed on the unencrypted data. Homomorphic encryption (HE) can be used for privacy-preserving outsourced storage and computation. This allows data to be encrypted and outsourced to devices or commercial cloud environments for processing, all while encrypted. For sensitive data, such as health care information, HE can be used to enable new services by removing privacy barriers inhibiting data sharing or increase security to existing services. For example, a predictive analytics service provider can operate on encrypted data to diminish privacy concerns. Fully homomorphic encryption (FHE) is an encryption scheme that enables analytical functions to be run directly on encrypted data while yielding the same encrypted results as if the functions were run on plaintext. This allows the evaluation of arbitrary circuits composed of multiple types of gates of unbounded depth and is the strongest notion of homomorphic encryption.

In an example of this embodiment, a sensor may obtain a public key and data processor (e.g., a first target device) may obtain an evaluation key, so that data can be processed in an encrypted domain. The owner may then keep the private key and may share it with a second target device so that the second target device can decrypt the results provided by the first target device. The owner may keep/use the private key to retrieve the processed data.

In a further example, a sensor may obtain a public key and use it to protect the data. A device receiving the data may obtain an evaluation key that may allow the device receiving the data to take decisions based on it without having access to the data itself. For instance, the receiving device may be capable of determining whether the received data is greater than a threshold (situation that may trigger an alarm).

In an MPC-based embodiment, an MPC protection scheme may be used, wherein the protection keys may be, e.g., shares in a key sharing scheme, while no related protection key is provided. MPC is a subfield of cryptography with the goal of creating methods for parties to jointly compute a function over their inputs while keeping those inputs private. Unlike traditional cryptographic tasks, where cryptography assures security and integrity of communication or storage and the adversary is outside the system of participants (an eavesdropper on the sender and receiver), the cryptography in this model protects participants' privacy from each other.

In an example of this embodiment, it is assumed that an actuator (e.g., robot) wants to navigate through a smart environment based on views of multiple smart cameras. In this case, the protection administrator 32 may configure the actuator with parameters and a protection scheme (i.e., and MPC scheme). The sensors (i.e., cameras) would sense and exchanged protection data, e.g., configured with the MPC scheme. The actuator is then able to navigate without having access to the plaintext data, but using MPC-protected data shared by the cameras.

In the following, more specific embodiments for protecting data from conflicting (adversarial) sensors of a target sensor are described with reference to Figs. 3 to 6, wherein at least one of the concepts mentioned below can be applied.

If sensor outputs are correlated, virtual sensors can be trained to predict the output of one sensor from the outputs of the other (correlated) sensors, as described e.g. in Andrea Brunello et al.: "Virtual Sensing and Sensors Selection for Efficient Temperature Monitoring in Indoor Environments", Sensors 2021 (https://doi.org/10.3390/s21082728). For example, motion sensor data acting from VR headsets as a virtual sensor can be used to infer data generated by a user's microphone, e.g., spoken passwords, as described e.g. in Cong Shi et al.: "Face-Mic: inferring live speech and speaker identity via subtle facial dynamics captured by AR/VR motion sensors", MobiCom '21: Proceedings of the 27th Annual International Conference on Mobile Computing and Networking, October 2021 (DOI: 10.1145 /3447993.3483272).

Furthermore, model input importance determination has been proposed e.g. by Runjin Chen et al.: "Explaining Neural Networks Semantically and Quantitatively", 18 December 2018, to determine how much a given feature (input) contributes to the decision of a neural network. Knowledge encoded in a convolutional neural network (CNN) can be explained quantitatively and semantically and distilled into an explainable additive model, so that the explainable model can be used to provide a quantitative explanation for the CNN prediction. A typical bias-interpreting problem of the explainable model is analysed and prior losses are developed to guide the learning of the explainable additive model.

Moreover, generative adversarial networks (GANs) are a recent innovation in machine learning. GANs are generative models that create new data instances that resemble training data. For example, GANs can create images that look like photographs of human faces, even though the faces don't belong to any real person. GANs achieve this level of realism by pairing a generator, which learns to produce a target output, with a discriminator, which learns to distinguish true data from the output of the generator. The generator tries to fool the discriminator, and the discriminator tries to keep from being fooled.

Adversarial training, used for example in GANs, trains a discriminator to learn a model. This model is then used (for example, by propagating gradients back through it) to train another network to output data that prevents the discriminator from performing a correct decision on that output, as described e.g. in Jason Brownlee: "A Gentle Introduction to Generative Adversarial Networks (GANs)" (retrieved from: https://machinelearningmastery.com/what-are-generative-adversarial-networks-gans/) or in Young-Bum Kim et al.: "Adversarial Adaptation of Synthetic or Stale Data", Proceedings of the 55th Annual Meeting of the Association for Computational Linguistics (Volume 1: Long Papers), July 2017 (DOI: 10.18653/v1/P17-1119). It can be achieved e.g. by improving a previously less good generator's output or alternatively by preventing the generator from outputting data which is useful for a correct decision.

Additionally, least squares generative networks (LS-GANs) can operate with a discriminator which has a mean squared error loss (rather than using a binary label and cross entropy loss), as described e.g. in Xudong Mao et al.: "Least Squares Generative Adversarial Networks", 2017 (DOI: 1611.04076v3). Although unsupervised learning with GANs has proven hugely successful, regular GANs hypothesize the discriminator as a classifier with the sigmoid cross entropy loss function. However, this loss function may lead to the vanishing gradients problem during the learning process. In machine learning, the vanishing gradient problem is encountered when training artificial neural networks with gradient-based learning methods and backpropagation. In such methods, during each iteration of training each of the neural network's weights receives an update proportional to the partial derivative of the error function with respect to the current weight. The problem is that in some cases, the gradient will be vanishingly small, effectively preventing the weight from changing its value. In the worst case, this may completely stop the neural network from further training. As one example of the problem cause, traditional activation functions such as the hyperbolic tangent function have gradients in the range, and backpropagation computes gradients by the chain rule. This has the effect of multiplying n of these small numbers to compute gradients of the early layers in an n-layer network, meaning that the gradient (error signal) decreases exponentially with n while the early layers train very slowly.

To overcome such a problem, LS-GANs adopt a least squares loss function for the discriminator. There are two benefits of LSGANs over regular GANs. First, LSGANs are able to generate higher quality images than regular GANs. Second, LSGANs perform in a more stable manner during the learning process.

A specific problem occurring in sensor network results from the possibility of reconstructing sensitive sensor data (e.g., a microphone listening to a user's interactions) from 'non-sensitive' sensors such as body or head worn inertial sensors (whose data are being uploaded to e.g., control a VR rendering engine), which act singly or together as a virtual sensor. Therefore, for example, the inertial sensors can be used to determine what the user is saying - using a password, chatting to friends etc. It is therefore desirable to prevent sensitive information for an 'important' sensor being reconstructed from `data leakage' from other `less important' sensors' data.

The following embodiments provide solutions to the above specific problem by at least one of determining that some sensor data needs to be noted as important or sensitive (all the time or only at certain times) and therefore gets protection against leakage of private information (e.g., virtual sensor reconstruction of privacy sensitive data); determining that a virtual sensor can in fact be used to reconstruct the privacy sensitive data (e.g., that might have been sensed by means of the first sensor 10 of Fig. 1) from data from at least a second (unrelated/unimportant) sensor (e.g., the second sensor 12 of Fig. 1); determining which second sensor(s) is/are necessary for the operation of such a virtual sensor; protecting against the operation of such a virtual sensor, given that it could be constructed and used by some malign agent; and providing appropriate permissions to users of the relevant data for use of raw, unprotected data and to other users for use of data resulting from the protection processing performed on that data.

Embodiments provide an access control (AC) and data permissions process which provides appropriate data permissions for abstracted sensors (actual and virtual), and data protection means for ensuring that a data stream from a sensor which is indicated to be sensitive/protected (one which might reveal confidential information etc.) is protected from reconstruction from unprotected data streams of single or multiple other sensors which may be used to provide useful input to at least one virtual sensor for that sensitive/protected sensor.

Furthermore, embodiments may be configured to determine and provide appropriate data permission rights of actual and virtual sensors. For example, if a virtual device such as a virtual sensor is instantiated in a network, the permissions/data rights for the virtual sensor need to be determined. If its output approximates an actual sensor which is sensitive/protected, then it should in principle be given similar permission rights to that sensor (since it is compromising that sensor).

In embodiments described herein, compromising sensors and sensitive/protected sensors are indicated as actual sensors, but it should be noted that they could just as well be virtual sensors themselves, and the proposed protection means can be applied to their outputs as well.

As an initial access control, the access control system (e.g., the access control system 30 of Fig. 1) may set or label a sensor as being sensitive/protected through some security setting, optionally indicated or confirmed by the user. Thereby, data rights can be established for that sensor (and virtual sensors), for example limiting applications (e.g., software apps) that can access that data. This may be set for all times, or the access control system may allow specific sensors to be marked as sensitive/protected only at specific times or in specific situations. Such a labelling as sensitive/protected then also enables virtual sensor protection for that sensor, e.g., through the processes described below. In examples, this approach can be implemented in the context of various operating systems (e.g., Android, IOS or the like), e.g., if Android or IOS are configured to natively implement Matter.

In embodiments, a virtual sensor model generation may be applied, wherein for each sensitive/protected sensor, the proposed protection process initiated by the access control system may examine all other sensors in the device/network (singly or together). Required information could be retrieved from a database or central repository. The proposed protection process then determines how well the examined sensors can reproduce the data from the sensitive/protected sensor. This can be achieved e.g. by building a predictive model (e.g., a virtual sensor mimicking that sensitive/protected sensor) which attempts to reconstruct the sensitive/protected sensor outputs from the data sourced from (all) other local sensors (excluding the sensitive/protected sensor(s)). This model may apply to (e.g., take input from) individual sensors or to combinations of sensors.

In embodiments, building the virtual sensor model may be based on training using stored time-aligned sensor data (e.g., from all sensors) which may be collected over a certain time period and stored in a data repository. In an example, the virtual sensor model may be trained to attempt to reproduce (as output) the selected sensitive/protected sensors' data from the other sensors data (as input). The virtual sensor model may be a convolutional or transformer-based neural network model trained e.g. with a mean square error (MSE) on the desired output, or it may be a very simple model such as a linear regression model.

The complexity of the implementation of the virtual sensor model can be adapted to the available computational situation, as a major part of the benefits of this concept may be gained from a simple model even if it is not quite as good as a more complex model.

Edge Artificial Intelligence (Edge AI) is an implementation of artificial intelligence in an edge computing environment. That means AI computations can be done at the edge of a given network, usually on the device where the data is created, instead of in a centralized cloud computing facility or offsite data center. In view of the availability of Edge AI chips, training a relatively small neural networks can be relatively quick and easy, which also applies to the proposed filtering model. In an example, training of the virtual sensor model and the filter model can be performed in one process. This could be based on a continual online training process employed for one of both models.

In embodiments, individual other sensors that compromise a sensitive/protected sensor may be determined e.g. by a quantitative measure on the virtual sensor model using a model input importance determination to select a subset of sensors which contribute to the performance capability of the virtual sensor model. These sensors may be marked as 'compromising' with respect to the sensitive/protected sensor and the virtual sensor model may then be optionally re-trained only on these sensors' outputs as input. In an example, this concept may be applied in a user interface (e.g., user interface 34 of Fig. 1) of the access control system or a privacy user interface to prevent privacy leakage from third sensors and/or track potentially leaked data.

In embodiments, a virtual sensor performance metric for evaluating sensor compromise may be obtained by analysing the virtual sensor model to produce a value that indicates how well a sensitive/protected sensor is mimicked/compromised by this virtual sensor model. The sensor performance metric may be based on a simple measure of the model performance using a test set (such as MSE), on its output compared to the ground truth output, or a minimum MSE found in sliding time data windows or the like. Additionally or alternatively, the sensor performance metric may be a functional measure, e.g., an extraction of words from speech into a microphone. Then, a speech recognition algorithm may be applied to the original protected microphone data and on the virtual sensor data to compare word error rates. If the word error rate on the virtual sensor is low and near the actual data, the microphone is compromised by the virtual sensor.

In an example, the obtained sensor performance metric may be converted into a number, for example between 0 (e.g., no compromise) and 1 (e.g., full compromise). If the value of merit is high enough, for example above some predefined threshold, then there is a high risk that information from the protected sensor can be generated by a malign party from the other, compromised sensors. In this case, the protection filtering process may be initiated for the concerned sensitive/protected. Otherwise, no action may be taken and no protective means may be employed for that sensitive/protected sensor. In an example, the user interface of the access control system and/or a privacy UI may be configured to allow configuring these features, wherein related information may be exchanged from a controller (e.g., the protection administrator 32 of Fig. 1) to a device (e.g., the first and/or second sensor 10, 12 in Fig. 1).

Fig. 3 schematically shows a training process for a virtual sensor model and a sensor filter model.

A VR device 300 (e.g., a VR headset or VR goggles) comprises a microphone 312 for generating a time series of microphone data D_{M} and an inertial sensor 310 for generating a time series of inertial sensor data D_{IS}. The inertial sensor data D_{IS} is subjected to a virtual sensor model (VSM) 320 of the microphone 312 and the model output data is compared to the real microphone data D_{M} to determine a reconstruction loss (RL), e.g., by applying the above sensor performance metric. Based on the comparison result, metric-related gradients are backpropagated to update the virtual sensor model 320.

Additionally, the inertial sensor data D_{IS} is supplied to a sensor filter model (SFM) 330 and a reconstruction loss (RL) between the sensor filter model output data and the inertial sensor data D_{IS} is determined, e.g., by applying the above sensor performance metric. Based on the comparison result, metric-related gradients are backpropagated to update the sensor filter model 330.

Furthermore, the sensor filter model output data is supplied to the virtual sensor model (VSM) 320 while it is not updated. At the output of the virtual sensor model 320 an adversarial reconstruction loss (ARL) is determined, e.g., by applying the above sensor performance metric. Based on the comparison result, metric-related gradients are backpropagated to the sensor filter model 330 to update the sensor filter model 330.

The virtual sensor model 320 is thus used to adversarially train the sensor filter model 330 which transforms the relevant set of (compromising) sensor data D_{IS} into new data which maximally matches the original sensor data D_{IS} whilst at the same time being unable to be used by the virtual sensor model 320 to reconstruct the sensitive/protected sensor data D_{M}. That is, the inertial sensor data D_{IS} is transformed in such a way as to minimally distort that original inertial sensor data D_{IS} whilst maximally degrading the virtual sensor performance.

The sensor filter model 330 may have the same number of outputs as inputs (one for each compromising sensor) and may operate therefore as a modified autoencoder, as described e.g. in Nagwa Elaraby et al.: "Large scale sensor data processing based on deep stacked autoencoder network", Journal of Theoretical and Applied Information Technology, November 2017 (DOI: 95(21):5907-5923).

Using the virtual sensor model 320 as a least squares adversarial discriminator, the sensor filter model, whose inputs are the set of compromised sensor data, can be trained to best reconstruct its inputs at its outputs plus be unable to reconstruct the target sensitive sensor data. This training uses as losses the virtual sensor model acting as a discriminator generating an adversarial loss (e.g., learning to output values which do not match the expected outputs of the virtual sensor operating on unmodified inputs) and balances this against the least squares reconstruction loss of the inputs of the sensor filter model 330 at its outputs.

For clarity, the two losses which are balanced during training are:
1. Reconstruction loss through reproduction of the original relevant sensor data (as accurately as possible at its output), determined e.g. by using MSE between each sensors' raw data and the output for that sensor as an autoencoder loss.
2. Adversarial loss to prevent mimicking the sensitive/protected sensor (e.g., the microphone 312 of Fig. 3 or the first sensor 10 of Fig. 1) by not enabling the virtual sensor to operate correctly and using the virtual sensor output different to its output when operating on the raw data, for example adding sufficient noise to that output or setting the output to zero, and backpropagating the gradients back through the virtual sensor model 320 to the sensor filter model 320 with the sensor filter model outputs tied to the virtual sensor model inputs.

As already mentioned above, the sensor filter model 320 is updated during this training, but the virtual sensor model is not.

The sensor filter model 320 can then be applied to the compromising sensors (e.g., the inertial sensor 310 of Fig. 3 or the second sensor 12 of Fig. 1), generating new versions of their outputs and we can now be confident the data from the protected sensor cannot be mimicked by a malign party if they are given these new filtered versions of the data.

In an embodiment, the sensor filter model 330 may be implemented to be run as near to the sensors (e.g., inertial sensor 310, microphone 312) as possible to ensure that they output data which is unable to reconstruct the 'sensitive sensor' data.

In an alternative embodiment, the sensor filter model 330 may be applied at the boundary of a trusted domain before data leaves the trusted domain. For instance, if the trusted domain only covers the sensor, then the sensor filter model 330 should be applied at the sensor before the data leaves the sensor. For instance, if the trusted domain covers a network, e.g., a smart home network, then the sensor filter model 330 may be applied at a network controller (e.g., the protection administrator 32 of Fig. 1), e.g., before the data leaves the network.

In embodiments, the sensor filter model 330 can be implemented as a software or hardware process which requires all relevant sensor data as input and which may be configured to output the filtered data for all sensors in one model, in which case it may be implemented in a central entity e.g., a hub collecting data from all the sensors in a network. Alternatively, in other embodiments, the sensor filter model 330 may be implemented as a plurality of individual sensor filter models for each sensor, which receive sensor data from their respective single sensor only, in which case they could be distributed to the sensors which may apply it prior to communication, e.g., when the access control system controls them to do so. In still other embodiments, a mixture of these two filter model approaches may be applied. Therefore, depending on the configuration, e.g., the distance between sensors or sensor groups, the protection system may be organised according to the best-suited configuration and distribution of protection processes.

Optionally, further improvements to the filter model output may be achieved by passing the filtered sensor data to their use applications and receiving back a data quality and/or utility measure or metric (or filter models may estimate this measure or metric from an input stream), which may also be used in the above sensor filter model training, e.g., to ensure that the filtering does not impact the utility of the transformed data.

Finally, instead of running the sensor filter model 330 continuously (or at the times indicated by the access control system), the virtual sensor model 320 could be run continuously on the raw data of (the) compromising sensor(s), while the filtering by the sensor filter model(s) 330 is only performed if its performance metric indicates a compromise, e.g., its running performance metric exceeds some predefined threshold. The sensors may then be switchable between employing the proposed compromise preventing filtering (protection filtering) or not.

However, it needs to be considered that there is a danger that the protection system may be unable to react in time to prevent an initial compromise, when the compromise preventing filtering (protection filtering) is applied only in case a potential compromise is indicated. Such a scheme may not have a significant computational advantage since the virtual sensor model 320 (which determines when a compromise is starting to occur) may be active during an inactivity of the sensor filter model 330. However, in general, it is beneficial if the protection system (e.g., access control system) is configured to set the compromising sensors to use the sensor filter model at certain times and not at others.

In embodiments, the access control system may be configured to provide different permission rights to entities/applications trying to access the raw data from compromising sensors and/or the filtered data from those same sensors. In an example, some (trusted) applications may use the raw data (if their access permissions allow this), but less trusted applications may only be provided with the filtered (protected) data from which data produced by sensitive/protected sensors cannot be reconstructed (i.e., their access permission does not allow access to raw data of identified compromising sensors). In an example, this may be achieved by changing the required permissions to access the compromising sensor raw data to that of the compromised sensor (or similar). To achieve this, the permissions required to access the data of actual sensors generating the raw data and/or virtual sensors generating the filtered data may be made different. E.g., lower values of permission privilege (e.g., priority) may be allocated to the filtered data than those allocated to the raw data.

Therefore, trusted receiver devices or applications may be given access to raw (actual) sensor data while other less trusted receiver devices or applications may be given access to the filtered data only.

In an embodiment, for each identified compromising sensor, a type of virtual sensor (which aims to reproduce an actual sensor) may be instantiated to generate the filtered data. A virtual sensor is instantiated based on an input configuration representing attribute values stored in a configuration file. The configuration attribute values may specify at least one of information needed to operate, e.g., input sources, output destination, reading rate from input queues, fault handling policy, and database address.

In an embodiment, the access control system may be responsible for data on an abstract level while it may not have to deal with other underlying devices. To do this, a middleware security layer may be used. Such a middleware security layer may not perform access control to data per sensor, but per functional data (which may be a collection of different actual sensor data or data from virtual sensors). At this abstract level, virtual and real sensors look similar, new virtual sensors can be added and data rights (permissions) can be allocated. The access control system may handle which applications and/or receiver devices can access which sensor data depending on these permissions. The middleware security layer is specifically important when combining sensors into an application function. E.g., in Matter, sensor data is aggregated in the destination (receiver) or an application itself. Here, more access control may be given to the user. For example, the user may then be able to determine in more detail the access to the data (who, how much etc.)

In a related embodiment, when an application (for instance, an application (app) running on a mobile phone, that can be downloaded from an app store or an application used in a smart home system), requests access to certain sensors, the middleware security layer can provide the application with either the raw data or the filtered data.

In a related embodiment, the middleware security layer may be configured to enable access to raw data by default or both raw and filtered data by default or filtered data by default.

In an embodiment, possible sensors may be abstracted into "abstracted functional sensors" including actual sensors, virtual sensors and the filtered sensor data (also abstracted as virtual sensors). Some sensors (actual or virtual) may be labelled by the protection process as compromising with respect to a concerned sensitive/protected (target) sensor or not compromising. Obtaining the data rights for, e.g, an abstracted device, may involve at least one of the following approaches:
- For abstracted non-compromising actual sensors, the controller (e.g., protection administrator 32 of Fig. 1) of the access control system may be configured to translate access control levels of actual sensor data in devices into usage rights (permissions) by reading the access control data from the relevant devices.
- For abstracted sensitive/protected sensors to be given their appropriate access control levels, the controller of the access control system may obtain user data about user preferences for use of sensor-generated data and may combine/aggregate this data with access control data from their specific function-relevant devices controllers.
- For abstracted compromising sensors, their abstracted raw sensor data may be given the same access control level as the abstracted sensitive/protected sensor compromised by them, possibly lowered depending on the degree of compromise as indicated e.g. by the above-mentioned virtual sensor performance metric, possibly aggregated with access control data from their specific function-relevant devices controllers.
- For abstracted filtered data generated by compromising sensors (e.g., processed by the sensor filter model 330), the controller of the access control system may treat these as if it was their original data and translates access control levels to the actual sensor data in their devices into usage rights (permissions) for these filtered virtual sensors.

In an example, access control levels allocated to non-compromising virtual sensors may be determined as a function (e.g., minimum) of the access control levels of their input devices.

In a related embodiment instantiating a further option for access control, the middleware security layer may be configured to add usage or access rights, e.g., to the raw or filtered data. Such usage rights may sometimes also be called 'DRM rights'. It should be understood that security layer may be arranged to manage different aspects of the usage rights (for example, accessing or transferring) in an independent manner i.e. both may be configured separately. Abstracted sensors requiring DRM rights may then include at least one of actual sensors (e.g., including the sensitive/protected sensor and the compromising sensors plus any uncompromising sensors), virtual sensors downloaded as apps and installed, virtual sensors set up by the access control system (including virtual sensor(s) used here), and sensor filter model outputs registered as individual virtual sensors for each compromised sensor. This could be achieved for example by packing sensor data in a DRM-protected file so that when an app/device needs to access the data, the DRM-protected file outputs raw or filtered data according to the associated DRM right.

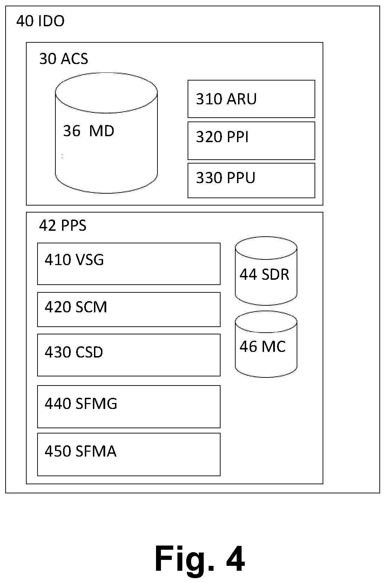

Fig. 4 schematically shows a block diagram of a data protection system according to an embodiment where an intelligent data obfuscating or blurring system (obfuscator) (IDO) 40 comprises or is integrated into an access control system (ACS) 30 for sensors which may include actual (real) sensors, virtual sensors and/or sensor data generated by a protection means, wherein a sensor may be abstracted into a functional sensor.

Every abstracted or functional sensor may be given a set of associated metadata (MD) stored in a database 36 and including at least one of an access control list (ACL) which may also be stored in the sensor, a unique abstracted sensor identifier (ID), an actual sensor, virtual sensor or filtered data represented as a virtual sensor and associated with the functional sensor (e.g., enabling access to its device etc.), a sensitive/protected status flag possibly allocated by default (e.g., all microphones) or by selection or confirmation by a user, details about a time period during which a sensitive/protected status should be given to the sensor, an indication entry (e.g., flag) indicating that the concerned sensor is compromising with respect to a specified sensitive/protected sensor or not, and an indication entry (e.g., flag) indicating that the concerned sensor is compromised by some other sensors or not.

Furthermore, the access control system 30 comprises an usage rights update (ARU) function 310 for allocating data permission levels to abstracted sensors as detailed above using their metadata (and other retrieved data).

Additionally, a protection provision initialisation (PPI) function 320 is provided, where a controller of the access control system 30 determines when the protection provision system is to be initiated for a specified sensor and may initiate this process.

Finally, a protection provision use function (PPU) 330 is provided, where the controller of the access control system 30 determines when the protection provision is to be used to filter compromising sensors and may start and stop the use process when different applications are consuming the data provided by identified compromising sensors.

The access control functions of the access control system may be enacted (triggered) e.g. via a user interface (not shown in Fig. 4) to a network hub, which may be provided on the network hub itself or on an app of a smartphone connected to the network hub.

The access control system 30 may also be implemented in a smart device such as a smart phone including multiple sensors and applications where a first sensor (e.g., accelerometer) may sample data that may compromise data/information gathered by a second sensor (e.g., microphone). For instance, the accelerometer of a smart phone on a table may be capable of sampling table vibrations caused by the voices of a conversation and thereby leaking the conversation.

Furthermore, the integrated data obfuscator 40 comprises a protection provision system (PPS) 42 which may correspond to the protection control unit 40 of Fig. 1 and which may comprise a virtual sensor generation process (VSG) 410 that may be enacted (triggered) for each sensitive/protected sensor whereby a virtual sensor model is trained to mimic the data output from that sensitive/protected sensor using data from (all) other sensors. The virtual sensor generation process 410 may include or access a sensor data repository (SDR) 44 in which sensor data is acquired over time, possibly filtered to maximise its diversity, a training process (not shown in Fig. 4) and a model cache (MC) 46 where resulting virtual sensor models are stored.

Furthermore, the protection provision system (protection means) 42 comprises a sensor compromise metric (SCM) 420 configured as a process that accesses the virtual sensor model and some test input data and generates a measure or metric of the virtual sensor model as to how compromised a concerned sensitive/protected sensor could be. This metric could be generated as part of the training process (e.g., as described in connection with Fig. 3) or could be generated afterwards as a specific function. Using a part of the information stored in the sensor data repository 44 (e.g., which has not been used in the training process) a performance evaluation is conducted and a metric (e.g., score) is obtained, e.g., a number from 0.0 (no compromise) to 1.0 (complete compromise).

This metric is then associated with the virtual sensor model. If the metric is low, then no protection needs to be performed and all associated sensors are marked as not compromising with respect to the sensitive/protected sensor.

Otherwise, further functions 430 to 450 of the protection means are undertaken, including updating the metadata for the sensitive/protected sensor to indicate it is compromised, determining compromising sensor(s), generating a sensor filter model, and applying the sensor filter model application.

The corresponding compromising sensor determination (CSD) function 430 may comprise a process for determining which sensors (sensor combination) are responsible for a possible compromise, wherein a subset of all the sensors may be considered. Again, for each sensor used in the virtual sensor inputs, a metric (e.g., score) is obtained from 0.0 (not compromising) to 1.0 (compromising). If the score is low, the concerned sensor is labelled in the metadata database 36 as not compromising with respect to the sensitive/protected sensor. Otherwise, it is marked as compromising with respect to that sensor.

Furthermore, the corresponding sensor filter model generation (SFMG) function 440 may comprise a training process of an autoencoder-like model using the virtual sensor model and the same or similar training data. This results in a function which can be applied to the compromising sensors' data when protection is to be performed. The sensor filter model generation function 440 may be implemented so that it can be applied to individual sensors alone or may require an input from multiple sensors. The sensor filter model may be stored in the model cache 46. A virtual sensor may be generated for each compromised sensor and added to the metadata associated with the filtered data obtained from that sensor.

Finally, the corresponding sensor filter model application (SFMA) function 450 may comprise processing output data (raw data) of the compromising sensors (at certain times or all the time) by the sensor filter model to yield filtered data which is represented as the output of a virtual sensor (e.g., one for each compromising sensor).

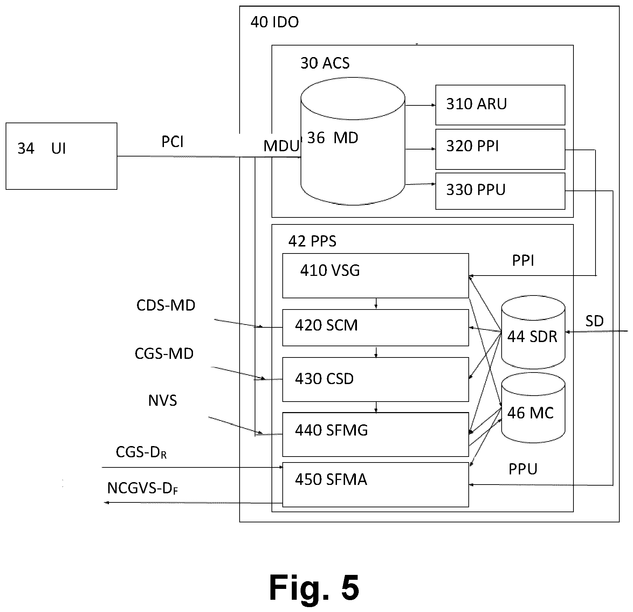

Fig. 5 schematically shows a process flow diagram of for data protection based on the system of Fig. 4.

A user may use a user interface 34 to input protection control information (PCI), such as identification of sensitive/protected sensors and/or compromising sensors and/or protection timing (intermittent or continuous protection) to the metadata database 36 of the access control system 30. The metadata is used by the usage rights update function 310, the protection provision initialisation function 320 and the protection provision use function 330 of the access control system 30 of the intelligent data obfuscator 40.

The virtual sensor generation process 410, the sensor compromise metric function 420, the compromising sensor determination function 430, and the sensor filter model generation function 440 perform their above-described functions based on information derived from the sensor data repository 44 to which external sensor data (SD) is supplied.

More specifically, the protection provision initialisation function 320 triggers a protection provision initialisation (PPI) at the virtual sensor generation process 410 which generates a virtual sensor model of a compromised sensor, as described above, stores it in the model cache 46, and supplies related information to the sensor compromise metric function 420 which generates at least one sensor performance metric, as described above. An output of the sensor compromise metric function 420 is used by the compromising sensor determination function 430 to determine compromising sensor(s), as described above. Furthermore, compromised sensor metadata (CDS-MD) obtained at the sensor compromise metric function 420 is stored in the metadata database 36. Additionally, compromising sensor metadata (CGS-MD) obtained at the compromising sensor determination function 430 is stored in the metadata database 36. The output of the compromising sensor determination function 430 is used by the sensor filter model generation function 440 to generate new sensor filter model(s) for new virtual sensor(s) e.g. using the virtual sensor model stored in the model cache 46 for a training process, as described above. Information (NVS) about the new virtual sensors obtained at the sensor filter model generation function 440 is stored in the metadata database 36. Finally, based on the virtual sensor model and the sensor filter model stored in the model cache 46, protection provision use (PPU) information (e.g., permissions etc.) generated by the protection provision use function 330 and raw compromising sensor data (CGS-D_{R}), the sensor filter model application function 450 generates in the above-described manner filtered non-compromising virtual sensor data (NCGVS-D_{F}) as protected (obfuscated) output data of the intelligent data obfuscator 40.

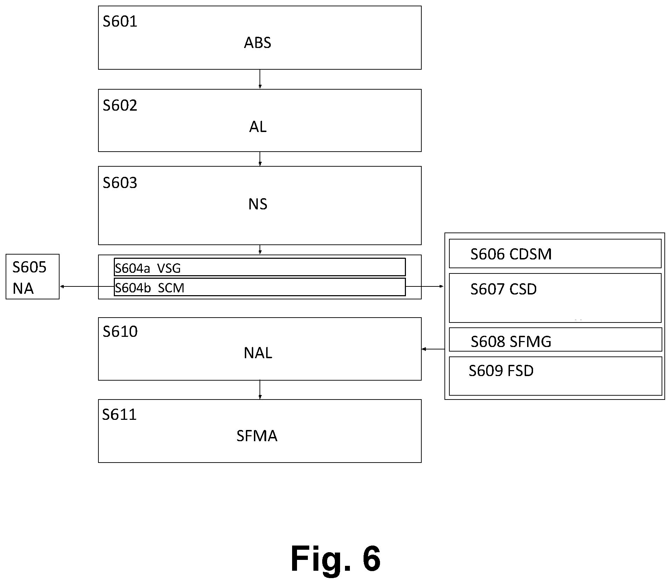

Fig. 6 schematically shows a flow diagram of a data protection process according to an embodiment.

In an initial step S601, at least some or all sensors (i.e., actual sensors, virtual sensors etc.) present in a system to be protected are abstracted as functional sensors (abstract sensors (ABS)). Functional abstraction provides a way for a function to perform its work or operations without showing how that operation is done or functionality is achieved. In simple terms, it is a way of hiding the actual implementation of the actual work of the sensor function and showing only the output provided by the sensor function.

Then, in step S602, access levels (AL) are allocated to the obtained abstract sensors according to the access control system and method using abstracted functional sensor metadata (and sensor-specific retrieved data).

In step S603, a sensor is newly noted as sensitive/protected sensor or a new sensor (NS) is added to the network in which an existing sensor is marked as sensitive/protected and the protection means (e.g., protection control unit 40 of Fig. 1 or protection provision system 42 of Fig. 4) for that sensitive/protected sensor is invoked. This leads to a virtual sensor generation process in step S604a where training data from the sensor data repository 44 is used to obtain a virtual sensor model placed in the model cache 46, and to sensor compromise metric is calculated for that virtual sensor model in step S604b.

If the calculated compromise metric is below a defined threshold, the procedure branches to step S605 and no action is performed e.g. until the procedure is restarted.

Otherwise, if the calculated compromise metric is above or equal to the defined threshold, then the procedure branches off to steps S606 to S609 where a sensitive/protected sensor is marked as compromised in the metadata (CDSM) in step S606, compromising sensor determination (CSD) is performed in step S607 and all sensors indicated as compromising with respect to the sensitive/protected sensor are marked as such in the metadata, a sensor filter model generation (SFMG) is performed using training data from sensor data repository and the virtual sensor model from the model cache 46 to obtain a sensor filter model placed in the model cache 46, and each filtered compromised sensor data (FSD) coming from the sensor filter model is represented in step S609 as a new virtual sensor and marked as not compromising with respect to the sensitive/protected sensor, and this is indicated in the metadata.

Then, the procedure continues in the main branch with step S610, where all modified abstract sensors are given new access levels (NAL) according to the changes in the functional sensor metadata using the access control system and method.

Finally, sensor filter model application is performed in step S611 at times indicated by the access control controller (e.g., protection administrator 32 of Fig. 1) based on information in the metadata.

It is noted that not all of the above steps are always required. If it is known that a first sensor (e.g., an accelerometer) may leak information of a second sensor (e.g., a microphone, voice information), then it may not be required to first create a virtual sensor of the first sensor. Moreover, the sensor filter model may also be created based on actual data of the first and second sensors.

To summarize, apparatuses/methods for enhanced data protection have been described, wherein a required data protection level for a data source is determined, at least a first device capable of generating data is determined, and a protection scheme configuration and parameters are assigned to the data generated by at least the first device. In an example, a data stream from a data-producing device which is indicated to be sensitive/protected (e.g., one which might reveal confidential information etc.) is protected from reconstruction from unprotected data streams of single or multiple other data-producing devices that may be used to provide useful input to a virtual sensor for that sensitive/protected sensor.

Although the embodiments were described in the context of home networking and metaverse, their applications are not limited to such a type of operation. They may be applied to any device or network of devices in which multiple sensors are present and some correlation between sensor outputs can occur, such as applications for healthcare, stores, shopping malls, the sports club, etc. Therefore, they may apply to single, multisensory devices such as smartphones, as well as to IoT or 5G networks and the like.

Furthermore, at least some of the embodiments can be applied to various types of UEs or terminal devices, such as mobile phone, vital signs monitoring/telemetry devices, smartwatches, detectors, vehicles (for vehicle-to-vehicle (V2V) communication or more general vehicle-to-everything (V2X) communication), V2X devices, Internet of Things (IoT) hubs, IoT devices, including low-power medical sensors for health monitoring, medical (emergency) diagnosis and treatment devices, for hospital use or first-responder use, virtual reality (VR) headsets, etc.

In an additional or alternative embodiment, the proposed sensor data obfuscation may be replaced or enhanced by source separation, blind signal separation (BSS) or blind source separation, wherein a set of source signals is separated from a set of mixed signals, without the aid of information (or with very little information) about the source signals or the mixing process. The mixtures of signals is analysed by digital signal processing with an objective to recover original component signals from a mixture signal. The recovered compromising component signal may then by deleted or suppressed from a compromising sensor output. Only the clean signal, i.e., after removal of the compromising component signal may then be exposed.

In an additional or alternative embodiment, the access control layer (e.g., PA (32) in Fig. 1) may analyze correlations in different data sources, e.g., S1 (10) and S2 (12), and derive suitable parameters for blind source separation (or data obfuscation).

In an additional or alternative embodiment, the access control layer may provide said suitable parameters for blind source separation (or data obfuscation) e.g., to S2 (12) if the data generated by S2 includes some hidden components of the data generated by S 1 (10) so that S2 applies said blind source separation process to generate a clean signal.

In an additional or alternative embodiment, the access control layer may apply said suitable parameters for blind source separation (or data obfuscation) e.g., to S2 (12) data (as received from S2) if the data generated by S2 includes some hidden components of the data generated by S 1 (10) so that the access control layer makes available a clean signal of S2 (12).

In a further use case, we can consider a personal smart wearable such as a smartwatch or a smart ring that is used by a user. The user uses such a personal smart wearable to facilitate tasks such as sports (e.g., running), work (e.g., receiving/sensing emails/calls), wellbeing (e.g., tracking sleep) or even health (e.g., monitoring arrythmias). This is feasible because the personal smart wearable has multiple sensors/actuators (e.g., an accelerometer or a microphone) and applications producing an/or consuming data. For instance,
- an application such as a fitness application may use data from the sensors in the personal smart wearable to track the activity of the user;
- an application such as an email client may receive data (emails and or notifications) and present them to the user;

These applications and/or data may be prone to attacks, e.g.:
- sensors of the personal smart wearable may be misused to track the user or extract private information. For instance, when a user is, e.g., typing her password in her laptop or entering the unlock code in her smart phone, the accelerometer measurements from the personal smart wearable may be used to extract/learn/derive the password/unlock code. Thus, an application on the personal smart wearable may be misused to extract such information.
- Notifications / data received on the personal smart wearable may also be read by applications on it, that may misuse them. For instance, a personal smart wearable may monitor email notifications and forward them to a third-party server.

Such a personal smart wearable is a specific example of where some embodiments in this invention may be applied to and how some of these embodiments may also be further refined.

In an embodiment, the personal smart wearable is configured to restrict/limit access to sensing data (e.g., accelerometer) when certain privacy-sensitive actions are carried out, in a given context. A common privacy-sensitive action is entering credentials into a login function or other sensitive information into an information input application. In such a case, when the personal smart wearable determines that the user is close to their laptop and/or writing on the keyboard (context), the personal smart wearable may limit the quality of the sensors (e.g., accelerometer) data provided to the applications, e.g., a fitness application, or limit the exchange of such data, or block the access to the sensing device (e.g., to certain applications). This may be achieved by the personal smart wearable being arranged to receive a notification/message from close-by private-information entering devices (e.g., a smartphone, tabled, laptop or even a Bluetooth-enabled keyboards), and/or monitor the presence of those devices (by for example, listening for presence announcement messages). This may be done by the private-information-entering devices by sending a notification/message to the personal smart wearable. Thus, the smart wearable is arranged to detect the proximity of a private-information-entering device, a security function in the smart wearable inhibits (i.e. prevents) transmissions of data obtained from the smart wearable's sensors to other devices or locations (e.g. servers). Advantageously, the inhibition of sensor data transmission may be limited in time. Alternatively or additionally, the inhibition may be removed by receipt of instruction from the private-information-entering device or by detecting that the private-information-entering device is no longer in proximity. Where the private-information- entering device is configured to indicate that it is not currently being used to enter any private data, the smart wearable may detect/monitor this and adapt the security controls accoringly.

In a further embodiment, it is possible to configure the personal smart wearable with a policy to limit the disclosure/exposure of privacy sensitive data. This configuration may be done by means of a controller, e.g., a smart home controller or a smart phone or a personal smart wearable capable of configuring the settings of the devices, e.g., personal smart wearable. This configuration may include limiting data quality in certain situations.

A smart device such as a smart phone (e.g., IPhone) may have applications such as an email client (e.g., Outlook) handling the business / private email of the user. This information may be highly private sensitive. Often, users find it convenient that notifications received in the smartphone be shared with the personal smart wearable, e.g., a smartwatch. These notifications can contain significant amounts of information and that information might be of a sensitive nature. This personal smart wearable may, if hacked or somehow compromised, leak information about the data of the main smart device, such as the contents of the notifications. Thus, in a further embodiment, a first device (smart device/phone) when operating with a second device (e.g., personal smart wearables), may be configured to apply protections to certain type of data (e.g., email notifications, data of a given application) when sharing such data in notification messages sent to the smart wearable. For example, all data from a given application (such as an email application) would be limited to a simple announcement of an event (receiving email) within the application without disclosing the contents/subject. In another embodiment, the smart wearable may be configured by the smart device to apply a DRM-based protection to certain types of notification, wherein the protection may allow the notification to be displayed on the smart wearable but prevents copying of the unprotected information from that smart wearable to another location or accessing that information on another device. To this end, the smart wearable may possess a secure storage for a DRM encryption key. For instance, the smart device may be capable of limiting the notifications related to a given application that may be handling private data.

In a similar manner, the DRM-based protection may be configured using the techniques described above.

Thus, in summary, there is wearable device, arranged to be worn by a user and arranged to receive a message from second device, the message containing a notification data, the wearable device comprising a processor, wherein the processor is configured to use a security function to apply a security policy to the notification data and wherein the security function is arranged to enable preventing transmission of at least a part of the notification data to a third device.

Also there is a wearable device, arranged to be worn by a user and arranged to receive a message from second device, the message containing a notification data, the wearable device comprising a display, a processor, wherein the processor is configured to use a security function to apply a security policy to the notification data and wherein the security policy prevents the showing of at least a part of the notification data on the display.

The security policy is arranged to selectively inhibit transmission of the at least part of the notification data based on a classification of the notification data.

There is also a wearable device, arranged to be worn by a user, comprising a sensor, the sensor being arranged to measure a physical parameter of the user and output corresponding measurement data, a processor, wherein the processor is configured to use a security function to apply a security policy to the measurement data and wherein the security function is arranged to enable preventing transmission of at least a part of the measurement data to a third device.

The wearable device is arranged to allow the security policy to be configured by a second device by receiving a message from the second device.

The wearable device of any previous claim comprising a secure storage wherein the secure storage is arranged to store security information and wherein the security function is arranged to use the cryptographic key as part of execution of the security policy.

The security policy is based on detection of proximity of the wearable device to a data-entry device.

The data-entry device is at least one selected from the group of a smartphone, a tablet, a laptop or a wireless keyboard.

The inhibition of transmission is stopped by the reception of an instruction from the data-entry device or an indication from the data-entry device that the data-entry device is not being used for the entry of sensitive data.

There is a device arranged to configure a wearable device, wherein the configuring comprises configuring the privacy policy of the wearable device.

The configuring of the privacy policy comprises providing security information to the smart wearable and an identification of a type of data to which the privacy policy applies.

The device has a privacy policy and wherein the device has an application program producing data and wherein the privacy policy is configurable to restrict the providing of the data to a selected wearable device or a selected application program, the selected application program being arranged to be run on a wearable device.

Also this may be summarised as a method of limiting information transmission from a wearable device comprising configuring a privacy policy of a wearable device by transmitting a message to the wearable device, the message containing an instruction to configure the privacy policy, wherein the privacy policy is arranged to selectively inhibit the wearable device from performing an action, the action being displaying or transmitting information received by the wearable device.

The method comprises configuring a privacy policy of a wearable device by transmitting a message to the wearable device, the message containing an instruction to configure the privacy policy, wherein the privacy policy is arranged to selectively inhibit the wearable device from performing an action, the action being a transmission from the wearable device of information generated by the wearable device.

The configuring is performed by a second device and comprises a reception of security information by the wearable device from the second device, the security information being arranged to be used by the wearable device to allow performing of the action.

Other variations to the disclosed embodiments can be understood and effected by those skilled in the art in practicing the claims, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments. It will be appreciated, however, that no matter how detailed the foregoing appears in the text, these embodiments may be practiced in many ways, and is therefore not limited to the embodiments disclosed. It should be noted that the use of particular terminology when describing certain features or aspects should not be taken to imply that the terminology is being re-defined herein to be restricted to include any specific characteristics of the features or aspects with which that terminology is associated. Additionally, the expression "at least one of A, B, and C" is to be understood as disjunctive, i.e., as "A and/or B and/or C".

A single unit or device may fulfil the functions of several items recited in the claims. The mere fact that certain measures are recited in mutually different dependent claims does not indicate that a combination of these measures cannot be used to advantage.

The described operations like those indicated in the above embodiments (e.g., Figs. 2, 3, 5 and 6) may be implemented as program code means of a computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus (32) for controlling data protection, wherein the apparatus is configured to:
determine a protection level required for target data;
determine at least a first device (10, 12) capable of generating the target data;
register the first device and metadata related to the first device as protection control information;
assign, based on the protection control information, a configuration of a protection scheme and related parameters to the target data generated by the first device (10, 12).

2. The apparatus of claim 1, wherein the apparatus (32) is further configured to:
assign a usage right to a second device (50) with respect to the data produced by the first device (10, 12); and
provide the usage right and the configuration of the protection scheme and the parameters to the second device (50).

3. The apparatus of claim 1 or 2, wherein the protection scheme is based on at least one of digital rights management, multiparty computation, homomorphic encryption, blind source separation, and data obfuscation.

4. The apparatus of claim 2, wherein the second device (50) is located outside a network domain in which the first device (10, 12) is located.

5. The apparatus of any of the preceding claims, wherein the apparatus is configured to perform one or more of the following actions:
• requesting a device or application to provide its security capabilities and/or requirements;
• requesting a user or application or service to provide input on the target data;
• requesting a user to provide input regarding a protection level required for either individual devices or aggregated devices;
• exposing data from one or more physical devices or one or more virtual devices protected according to the configuration of the protection scheme;
• determining a protection level for a virtual device based on the configuration of the protection scheme and/or requirements based on at least protection level requirements of underlying devices and a protection level of consuming applications;
• instructing the first device (10, 12) to use a certain type of protection so that data generated by the first device (10, 12) is protected on its way from the first device (10, 12) to the second device (50);
• receiving data from the first device (10, 12) and protecting the received data stream of the first device (10, 12), wherein protection from an access control layer to the second device (50) is achieved by means of a given protection option; and
• receiving feedback from the second device (50) regarding successful and/or unsuccessful application of a given type of protection.

6. The apparatus of any of the preceding claims, wherein the protection scheme is a multiparty computing, MPC, protection scheme and wherein protection keys are shares in a key sharing scheme.

7. The apparatus according to any of claims 1 to 5, wherein the protection scheme is a homomorphic encryption scheme and wherein the first device (10, 12) obtains a public key and the second device (50) obtains an evaluation key, so that the target data can be processed in an encrypted domain.

8. The apparatus according to any of claims 1 to 5, wherein the protection scheme is an attribute-based encryption scheme, wherein the first device obtains a public key derived from the access control attributes that gives access to the data, wherein the first device uses the public key to encrypt the produced data, and wherein the second device obtains a private key that depends on its own attributes, so that the second device has access to the data if its access control attributes match the attributes of the public key used to encrypt the data.

9. The apparatus according to any of claims 1 to 5, wherein the protection scheme is based on symmetric keys, wherein the first device obtains a symmetric key to protect the produced data and the second device obtains, if authorized, the same symmetric key so that the second device may have access to the data if it is authorized.

10. The apparatus of any of the preceding claims, wherein the required protection level for the target data is determined based on combined data protection requirements of multiple first devices (10, 12).

11. The apparatus of claim 10, wherein the required protection level corresponds to a maximum protection level of the first devices (10, 12) subject to performance.

12. A system for controlling data protection, wherein the system comprises:
a protection administrator (32) comprising an apparatus as claimed in any one of claims 1 to 6;
an interface (34) for setting at the protection administrator (32) a usage right of a second device (50) with respect to the target data produced by the first device (10, 12); and
at least one first device (10, 12);
wherein the first device (10, 12) is configured to protect its gathered data by using the configuration of the protection scheme and the parameters, and to share the protected data;
wherein the protection administrator (32) is configured to receive from the second device (50) a request for the usage right and the configuration of the protection scheme and the parameters; and
wherein the protection administrator (32) provides the usage right and the configuration of the protection scheme to the second device (50).

13. The system of claim 12, wherein the protection administrator (32) is controlled by a digital rights management, DRM, system to register information about which sensors (10, 12) of a network are designated to generate DRM-protected data and to register based on the information a corresponding access control list in the designated sensors, wherein the use right defines conditions for the second device (50) to access the sensor data, wherein the protection administrator (32) is configured to provide DRM protection keys to the designated sensors to protect their sensor data by using the configuration of the protection scheme and the DRM protection key, and wherein the protection administrator (32) is configured to receive from the second device (50) a request for the usage right and the DRM protection key and to provide the usage right and the DRM protection key to the second device (50).

14. A method for controlling data protection, wherein the method comprises the steps of:
determining a protection level required for target data;
determining at least a first device (10, 12) capable of generating the target data;
registering the first device and related metadata as protection control information; and
assigning based on the protection control information a configuration of a protection scheme and related parameters to the target data generated by the first device (10, 12).

15. The method of claim 14, further comprising:
assigning a usage right to a second device (50) with respect to the data produced by the first device (10, 12); and
provide the usage right and the configuration of the protection scheme and the parameters to the second device (50).

16. The method of claim 14 or 15, further comprising:
setting a usage right of a second device (50) with respect to the target data produced by the first device (10, 12);
protecting data gathered at the first device (10, 12) by using the configuration of the protection scheme and the parameters;
sharing the protected data by the first device (10, 12);
receiving from the second device (50) a request for the usage right and the configuration of the protection scheme and the parameters; and
providing the usage right and the configuration of the protection scheme to the second device (50).

17. A computer program product comprising code means for producing the steps of any of claims 14 to 16 when run on a computer device.
